# EUROPÄISCHE PATENTSCHRIFT

(11) **EP 3 169 916 B1**
(45) Veröffentlichungstag und Bekanntmachung des Hinweises auf die Patenterteilung: **06.04.2022**
(21) Anmeldenummer: 15760382.0
(22) Anmeldetag: 13.07.2015
(51) Int. Cl.: F16H 61/00, F16J 15/08

(54) **STEUEREINHEIT FÜR FLUIDBETRIEBENE VERBRAUCHER**
CONTROL UNIT FOR FLUID OPERATED CONSUMERS
UNITÉ DE COMMANDE POUR RÉCEPTEURS À COMMANDE HYDRAULIQUE

(30) Priorität: 15.07.2014 DE 102014109937
(43) Veröffentlichungstag der Anmeldung: 24.05.2017
(73) Patentinhaber: ElringKlinger AG, 72581 Dettingen (DE)
(72) Erfinder: SCHÖLLHAMMER, Jochen, 72581 Dettingen (DE); GÖHL, Kristian, 72762 Reutlingen (DE)
(74) Vertreter: Hoeger, Stellrecht & Partner Patentanwälte mbB
(86) Internationale Anmeldenummer: PCT/EP2015/065972
(87) Internationale Veröffentlichungsnummer: WO 2016/008847

(56) Entgegenhaltungen:
- EP-A1- 0 094 616
- EP-A1- 1 607 662
- DE-A1- 3 633 988
- DE-U1-202009 009 232
- DE-U1-202012 012 058

## Beschreibung

Die Erfindung betrifft eine Steuereinheit für fluidbetriebene Verbraucher, insbesondere eine Getriebesteuereinheit, umfassend zwei Gehäuseteile mit einander zugewandten Abdichtflächen, zwischen denen eine Zwischenplatte angeordnet ist, welche mit Dichtoberflächenbereichen an den Abdichtflächen fluiddicht anliegt. Die Zwischenplatte zur Abdichtung der einander gegenüberliegenden Abdichtflächen der Gehäuseteile der Steuereinheit für fluidbetriebene Verbraucher, insbesondere eine Getriebesteuereinheit, umfasst zwei den jeweiligen Abdichtflächen zugewandte und an diesen dichtend anlegbare Dichtoberflächenbereiche mindestens einer Dichtlage.

Das Dokument DE 20 2009 009232 U1 offenbart ein Blech, insbesondere ein Abschluss-, Zwischen- oder Verteilerblech für Kraftfahrzeuggetriebe, mit einem Gehäuse aus Leichtmetall, dass mit einer Dichtung versehen ist, wobei die Dichtung von einer Beschichtung aus Leichtmetall gebildet ist. Die EP 0 094 616 A1 offenbart eine metallische Dichtung umfassend eine einzelne metallische Basisplatte, welche eine Sicke und eine Mikroabdichtung umfasst. Die DE 20 2012 012 058 U1 offenbart eine Steuereinheit mit mindestens zwei Flanschen und eine zwischen den mindestens zwei Flanschen angeordnete Zwischenplatte, wobei in mindestens einer metallischen Lage der Zwischenplatte mindestens eine Sicke eingeformt ist und wobei bei als vorteilhaft beschriebenen Ausführungsformen die Zwischenplatte zumindest zwei gesickte Lagen aufweist und zwischen den beiden gesickten Lagen mindestens eine unprofilierte Lage angeordnet ist und es besonders bevorzugt ist, wenn die beiden gesickten Lagen eine polymerbasierte Beschichtung aufweisen und bei der unprofilierten Lage dazwischen auf eine Beschichtung verzichtet wird oder eine metallische Beschichtung vorgesehen wird.

Bei derartigen Zwischenplatten besteht das Problem, dass üblicherweise die Dichtoberflächenbereiche zur Abdichtung mit Elastomerbeschichtungen versehen werden, die während des Betriebs der Steuereinheit beschädigt werden, so dass eine Abdichtung zwischen den Dichtoberflächenbereichen und den Abdichtflächen im Lauf der Betriebsdauer der Steuereinheit leidet.

Der Erfindung liegt daher die Aufgabe zugrunde, eine Zwischenplatte sowie eine Steuereinheit mit einer derartigen Zwischenplatte derart zu verbessern, dass eine dauerhafte und zuverlässige Abdichtung zwischen den Dichtoberflächenbereichen und den Abdichtflächen gewährleistet ist.

Diese Aufgabe wird bei einer Steuereinheit mit einer Zwischenplatte erfindungsgemäß durch die Merkmalskombination des Anspruchs 1 gelöst. Einige erfinderische Weiterentwicklungen sind in den abhängigen Ansprüchen definiert.

Der Vorteil der erfindungsgemäßen Lösung ist darin zu sehen, dass eine derartige gleitfähige Metallbeschichtung den Vorteil aufweist, dass diese einen geringeren Verschleiß und geringeren Abnutzungserscheinungen unterliegt als eine Elastomerschicht und daher einerseits dauerhaft die Gleitfähigkeit relativ zu der jeweiligen Abdichtfläche als auch die Abdichtung zu der jeweiligen Abdichtfläche sicherstellt.

Eine besonders günstige Lösung sieht dabei vor, dass die Metallbeschichtung aus einem Material gebildet ist, dessen Brinell-Härte kleiner als 50 HB ist.

Um eine ausreichende Standfestigkeit der Metallbeschichtung zu erhalten, ist vorzugsweise vorgesehen, dass die Metallbeschichtung eine Brinell-Härte aufweist, die größer als 10 HB ist.

Um eine ausreichend große Standfestigkeit der Metallbeschichtung zu erhalten, ist vorzugsweise vorgesehen, dass die Metallbeschichtung eine Schubfestigkeit aufweist, die größer als 2 MPa (Mega Pascal) ist.

Das Material der Metallbeschichtung kann dabei die verschiedenste Zusammensetzung aufweisen.

Vorzugsweise ist das Material der Metallbeschichtung ein Weichmetall.

Derartige Weichmetalle sind beispielsweise reine Metalle, wie Aluminium, Kupfer, Zinn oder Zink.

Vorzugsweise können alternativ zu den reinen Metallen aber auch Metalllegierungen zum Einsatz kommen, wie beispielsweise Aluminiumlegierungen, Kupferlegierungen oder Zinnlegierungen oder Bleilegierungen, beispielsweise Kupfer-Zinn-Legierungen, Blei-Zinn-Legierungen, Messinglegierungen.

Besonders günstig sind dabei für die Metallbeschichtung Werkstoffe, die auch als Gleitlagerwerkstoffe eingesetzt werden.

Hinsichtlich der Schichtdicken der erfindungsgemäßen Metallbeschichtung wurden bislang keine näheren Angaben gemacht.

So sieht eine vorteilhafte Lösung vor, dass die Metallbeschichtung eine Schichtdicke aufweist, die 1 µm oder größer, noch besser 2 µm oder größer ist.

Hinsichtlich der Wirksamkeit der Metallbeschichtung ist es ferner von Vorteil, wenn die Schichtdicke derselben begrenzt ist.

Beispielsweise ist vorgesehen, dass die Metallbeschichtung eine Schichtdicke aufweist, die 8 µm oder kleiner ist.

Die Metallbeschichtung kann bei der erfindungsgemäßen Lösung unmittelbar auf dem Material der Dichtlage aufgetragen sein.

Bei einem unmittelbaren Auftrag lässt sich vorzugsweise sogar ein Zustand erreichen, bei welchem die Metallbeschichtung partiell in das Material der Dichtlage eindiffundiert, um eine möglichst innige Verbindung zwischen der Metallbeschichtung und der Dichtlage herzustellen.

Eine andere vorteilhafte Lösung sieht vor, dass die Metallbeschichtung auf einer Hartbeschichtung aufgetragen ist, welche ihrerseits auf der Dichtlage aufgetragen ist, das heißt, dass in diesem Fall die Hartbeschichtung eine Zwischenschicht zwischen dem Material der Dichtlage und der Metallbeschichtung bildet.

Eine derartige Hartbeschichtung hat den Vorteil, dass diese eine Sicherheit für den Fall bietet, dass die Metallbeschichtung im Laufe des Einsatzes der Zwischenlage abgetragen wird, so dass in diesem Fall dann die Hartbeschichtung das Material der Dichtlage gegen direkten Kontakt mit den Abdichtflächen schützt.

Die Hartbeschichtung umfasst vorzugsweise Materialien aus der Klasse der Keramiken oder Metalle beispielsweise folgende Materialien DLC, TiN, SiC, Cr, Hartbronze.

Vorzugsweise ist die Hartbeschichtung so ausgebildet, dass sie eine Brinell-Härte aufweist, die größer als 100 HB ist.

Die Schichtdicke der Hartbeschichtung beträgt vorzugsweise 1 µm oder mehr.

Ferner ist die Hartbeschichtung vorzugsweise so gestaltet, dass deren Schichtdicke 10 µm oder weniger beträgt.

Insbesondere ist es günstig, wenn die Schichtdicke der Hartbeschichtung geringer ist als die Schichtdicke der Metallbeschichtung.

Insbesondere ist es günstig, wenn die Hartbeschichtung direkt auf die Dichtlage unmittelbar ohne Zwischenlage aufgetragen ist.

Hinsichtlich der Dichtlage sind die unterschiedlichsten Lösungen denkbar.

Beispielsweise könnte die Dichtlage aus den verschiedensten Materialien hergestellt sein.

Besonders günstig ist es, wenn die Dichtlage eine metallische Dichtlage ist.

Insbesondere im Fall einer metallischen Dichtlage ist vorzugsweise vorgesehen, dass die Dichtlage durch eine mit einer Sicke versehene Metallblechlage gebildet ist.

In diesem Fall bildet vorzugsweise ein Sickenkamm den zur Abdichtung mit der Abdichtfläche herangezogenen Dichtoberflächenbereich.

Aus diesem Grund ist vorzugsweise vorgesehen, dass zumindest im Bereich eines einer Abdichtfläche zugewandten Sickenkamms die freiliegende Metallbeschichtung angeordnet ist.

Alternativ dazu ist vorgesehen, dass die Dichtlage durch eine sich in einer zu den Abdichtflächen parallelen Fläche erstreckende flache Blechlage gebildet ist.

In diesem Fall ist vorzugsweise vorgesehen, dass die Dichtlage zu den Abdichtflächen parallel verlaufende Dichtoberflächen aufweist.

Vorzugsweise ist bei einer Steuereinheit vorgesehen, dass die Abdichtflächen eine gemittelte Rautiefe aufweisen, die kleiner als 10 µm ist, um insbesondere im Zusammenhang mit der Metallbeschichtung eine ausreichend gute Abdichtung bei ausreichend guten Gleiteigenschaften zu ermöglichen.

Besonders günstig ist es ferner, wenn die Dichtoberflächenbereiche der freiliegenden Metallbeschichtung mit den Abdichtflächen eine Werkstoffpaarung bilden, deren Gleitreibungszahl 0,6 oder kleiner, noch besser 0,5 oder kleiner ist, um einerseits die erforderlichen Gleiteigenschaften zu erhalten und andererseits eine ausreichend gute Abdichtung zu erreichen.

Hinsichtlich der Abdichtflächen der Gehäuseteile wurden bislang keine näheren Angaben gemacht.

So sieht eine vorteilhafte Lösung vor, dass die Abdichtflächen der Gehäuseteile durch freiliegende Metalloberflächen gebildet sind.

Vorzugsweise sind dabei die die Abdichtflächen bildenden Metalloberflächen Aluminiumoberflächen oder Stahloberflächen.

Besonders günstig lässt sich eine derartige Lösung dann realisieren, wenn die Gehäuse selbst aus Metall, das heißt selbst aus Aluminium oder Stahl hergestellt sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Explosionsdarstellung einer erfindungsgemäßen Steuereinheit mit zwei Gehäuseteilen, deren Abdichtflächen einander zugewandt sind und zwischen denen eine erfindungsgemäße Zwischenplatte angeordnet ist;
- Fig. 2: ein in der Höhe auseinandergezogene Darstellung eines teilweisen Schnitts längs Linie 2-2 in Fig. 1 bei einem ersten Ausführungsbeispiel einer erfindungsgemäßen Steuereinheit;
- Fig. 3: eine Darstellung eines Schnitts ähnlich Fig. 2 bei einem zweiten Ausführungsbeispiel einer nicht unter den Anspruchswortlaut fallenden Steuereinheit;
- Fig. 4: eine Darstellung eines Schnitts ähnlich Fig. 2 bei einem dritten Ausführungsbeispiel einer erfindungsgemäßen Steuereinheit;
- Fig. 5: eine Darstellung eines Schnitts ähnlich Fig. 2 bei einem vierten Ausführungsbeispiel einer nicht unter den Anspruchswortlaut fallenden Steuereinheit;
- Fig. 6: eine Darstellung eines Schnitts ähnlich Fig. 2 bei einem fünften Ausführungsbeispiel einer nicht unter den Anspruchswortlaut fallenden Steuereinheit und
- Fig. 7: eine Darstellung eines Schnitts ähnlich Fig. 2 bei einem sechsten Ausführungsbeispiel einer erfindungsgemäßen Steuereinheit.

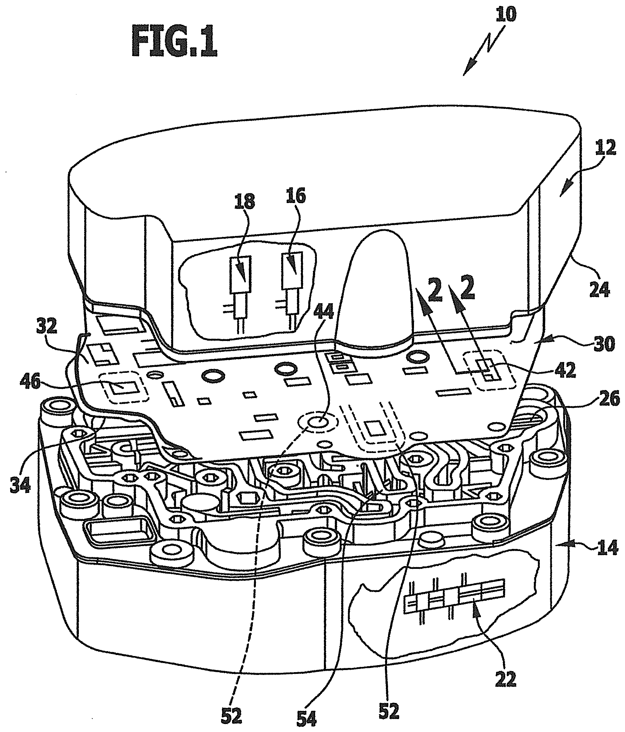

Eine in Fig. 1 schematisch dargestellte und als Ganzes mit 10 bezeichnete Steuereinheit für fluidbetriebene Verbraucher, beispielsweise für fluidbetriebene Getriebeeinheiten, insbesondere Getriebeeinheiten für Kraftfahrzeuge, umfasst ein erstes Gehäuseteil 12, insbesondere aus Metall, und ein zweites Gehäuseteil 14, insbesondere aus Metall, wobei beispielsweise im ersten Gehäuseteil Ventile 16, 18 und im zweiten Gehäuseteil 14 beispielsweise ein Schieber 22 angeordnet sind, die jeweils einen Fluss von Fluid in dem jeweiligen Gehäuseteil 12, 14 steuern oder regeln.

Die beiden Gehäuseteile 12, 14 weisen einander zugewandte Kanalseiten 24 und 26 auf, welche so ausgebildet sind, dass das Fluid von dem einen Gehäuseteil 12, 14 in das jeweils andere Gehäuseteil 14, 12 übertreten kann.

Zwischen diesen Kanalseiten 24 und 26 der Gehäuseteile 12, 14 ist eine als Ganzes mit 30 bezeichnete Zwischenplatte eingesetzt, die an der Kanalseite 24 des ersten Gehäuseteils 12 mit einer ersten Seite 32 und an der Kanalseite 26 des zweiten Gehäuseteils 14 mit einer zweiten Seite 34 anliegt und jeweils mit den Kanalseiten 24, 26 dicht abschließt, wobei in der Zwischenplatte 30 Durchlässe, beispielsweise die Durchlässe 42, 44, 46 und eventuell noch weitere Durchlässe, vorgesehen sind, durch welche ein Über treten des Fluids von einem Gehäuseteil 12, 14 in das andere Gehäuseteil 14, 12 erfolgt.

Dabei ermöglichen einige der Durchlässe, beispielsweise die Durchlässe 42 und 46, ein ungehindertes Übertreten des Fluids von dem einen Gehäuseteil 12, 14 in das jeweils andere Gehäuseteil 14, 12, ergänzend dazu dienen einige der Durchlässe, beispielsweise der Durchlass 44, dazu, als Funktionselement zur Beeinflussung des vom einen Gehäuseteil 12, 14 in das andere Gehäuseteil 14, 12 übertretenden Fluids zu wirken, wobei durch einen derartigen Durchlass 44 beispielsweise eine gezielt anpassbare Drosselwirkung zu Steuerung von Abläufen, insbesondere zeitlichen Abläufen bei Schaltvorgängen, erreicht werden kann.

Zur funktionssicheren Abdichtung zwischen den Kanalseiten 24 und 26 der Gehäuseteile 12 und 14 sowie der Zwischenplatte 30 sind um die Durchlässe 42, 44, 46 herum verlaufende oder diese eng oder weiträumig umschlingende Dichtoberflächenbereiche 52 an der Zwischenplatte 30 vorgesehen, die im zusammengebauten Zustand der Steuereinheit an entsprechend verlaufenden Abdichtflächen 54 der Kanalseiten 24, 26 anliegen.

Die Abdichtflächen 54 der Kanalseiten 24, 26 sind beispielsweise freiliegende Metalloberflächen, die bearbeitet sind und vorzugsweise so bearbeitet sind, dass diese eine Rauigkeit aufweisen, die geringer ist als 10 µm.

Besonders günstig ist es, wenn die gemittelte Rautiefe Rz der Metalloberflächen im Bereich bei 10 µm oder weniger liegt.

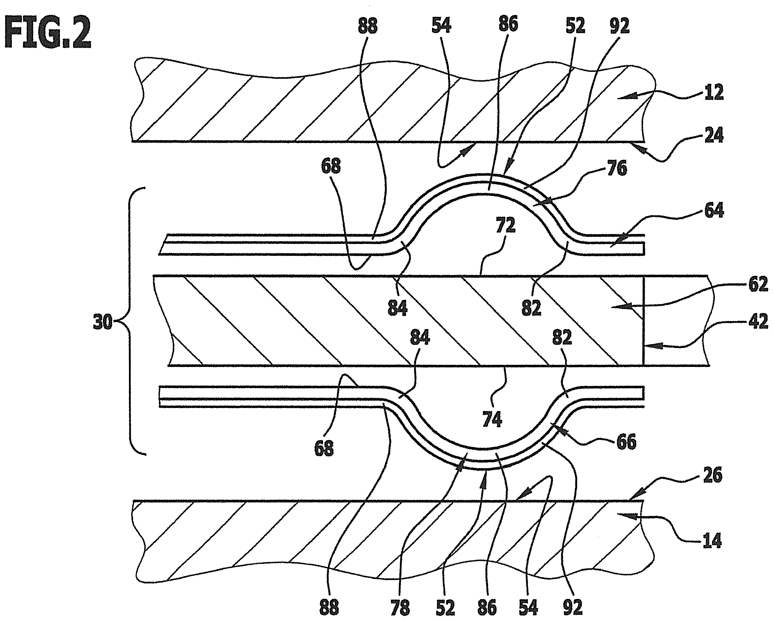

Bei einem in Fig. 2 dargestellten ersten Ausführungsbeispiel einer erfindungsgemäßen Steuereinheit 10 mit einer Zwischenplatte 30 ist diese Zwischenplatte 30 aufgebaut aus einer Trägerplatte 62, welche beispielsweise aus Metall ausgebildet ist und welche beiderseits eine metallische Dichtlage 64, 66 trägt, die auf jeweils einander gegenüberliegenden Oberflächen 72, 74 der Trägerplatte 62 aufliegen.

Die Dichtlagen 64 und 66 liegen mit ihren der Trägerplatte 62 zugewandten Dichtlagenunterseiten 68 auf den einander gegenüberliegenden Oberflächen 72 und 74 der Trägerplatte auf, und schließen mit der Dichtlagenunterseite 68 dicht mit den Oberflächen 72 und 74 der Trägerplatte 62 ab.

Vorzugsweise sind die Dichtlagen 64 und 66 mit der Trägerplatte 62 derart verbunden, dass die Dichtlagen 64 und 66 sich nicht parallel zur Ausdehnung der Trägerplatte 62 bewegen können und somit im Zusammengebauten Zustand keine Gleitbewegung zwischen den Dichtlagen 64 und 66 und der Trägerplatte 62 auftritt.

Die metallischen Dichtlagen 64, 66 sind vorzugsweise ebenfalls aus einer Metalllage, insbesondere einem Metallblech, gebildet und weisen zur Verbesserung der Abdichtung innerhalb des jeweiligen Dichtoberflächenbereichs 52 Sicken 76 und 78 auf, die vorzugsweise als Vollsicken ausgebildet sind, deren jeweilige Sickenfüße 82, 84 auf den Oberflächen 72, 74 der Trägerplatte 62 aufliegen, während die jeweiligen Sickenkämme 86 den jeweiligen Abdichtflächen 54 der Kanalseiten 24, 26 zugewandt sind, so dass sich insbesondere im Bereich der Sickenkämme 86 die Dichtoberflächenbereiche 52 ausbilden, welche an den Abdichtflächen 54 fluiddicht anliegen.

Die Dichtlagen 64, 66 sind vorzugsweise aus Stahl ausgebildet.

Ein Anlegen der Dichtlagen 64, 66 mit deren Oberflächenbereichen 52 an den Abdichtflächen 54 würde jedoch aufgrund der Rauigkeit der Abdichtflächen 54 keine bei hohen Drucken ausreichend fluiddichte Abdichtung ergeben.

Aus diesem Grund sind die Dichtlagen 64, 66, in den Dichtoberflächenbereichen 52 jeweils auf ihrer Dichtlagenoberseite 88 mit einer Metallbeschichtung 92 versehen, welche bei dem ersten Ausführungsbeispiel mindestens im Bereich der Sickenkämme 86 unmittelbar an der Abdichtfläche 54 der jeweiligen Kanalseite 24, 26 einerseits dichtend anliegen kann und andererseits relativ zur jeweiligen Abdichtfläche 54 gleitfähig ist, so dass die jeweilige Dichtlage 64, 66 mit dem jeweiligen Dichtoberflächenbereich 52, der bei diesem Ausführungsbeispiel mindestens im Bereich der Sickenkämme 86 liegt, aufgrund thermischer oder mechanischer Einflüsse eine gleitende Relativbewegung zu den Abdichtflächen 54 der Kanalseiten 24, 26 ausführen kann, ohne dass die Abdichtung zwischen den Dichtoberflächenbereichen 52 und dem jeweiligen Abdichtbereich 54 leidet.

Vorzugweise ist die Metallbeschichtung 92 dabei aus einem Weichmetall hergestellt und weist vorzugsweise eine Brinell-Härte von kleiner als 50 HB auf.

Derartige für die Metallbeschichtung 92 geeignete Materialien sind entweder Aluminium oder Kupfer oder Zinn oder Zink oder Metalllegierungen, wie beispielsweise Kupfer-Zinn-Legierungen, Blei-Zinn-Legierungen, Aluminiumlegierungen oder Messinglegierungen.

Der Vorteil derartiger Weichmetalllegierungen besteht darin, dass mit diesen sich zwischen den Dichtoberflächenbereichen 52 und den Abdichtflächen 54 Werkstoffpaarungen ergeben, deren Gleitreibungszahl bei 0,5 oder weniger liegt, so dass dadurch ein ausreichend gutes Gleiten der Dichtoberflächenbereiche 52 relativ zu den Abdichtflächen 54 möglich ist und gleichzeitig eine gute Abdichtung zwischen den Dichtoberflächenbereichen 52 und den Abdichtflächen 54 entsteht.

Insbesondere sind die Metallbeschichtungen 92 so ausgeführt, dass diese eine Schubfestigkeit aufweisen, die größer als 2 MPa ist.

Die Schichtdicke der Metallbeschichtung 92 zur Bildung der Dichtoberflächenbereiche 52 liegt beispielsweise bei Werten von 1 µm und mehr, vorzugsweise Werten von 2 µm und mehr.

Maximal beträgt die Schichtdicke der Metallbeschichtung 92 10 µm oder weniger, vorzugsweise 8 µm oder weniger.

Mit derartigen Schichtdicken der Metallbeschichtung 92 ergibt sich einerseits eine ausreichend gute Abdichtung bei verbesserten Gleiteigenschaften zwischen den Dichtoberflächenbereichen 52 und den Abdichtflächen 54, die außerdem noch eine hohe Standzeit aufweist, so dass sowohl die Gleiteigenschaften als auch die Abdichtung während einer vorgesehenen Lebensdauer der erfindungsgemäßen Steuereinheit 10 erhalten bleiben.

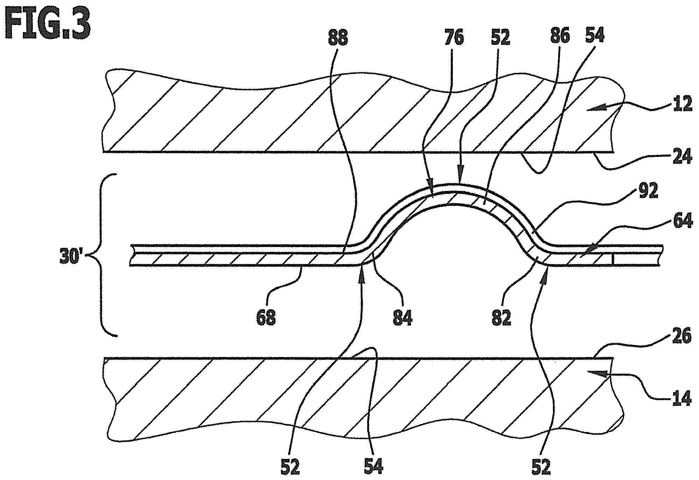

Bei einem zweiten, in Fig. 3 dargestellten vereinfachten Ausführungsbeispiel umfasst die Zwischenplatte 30' lediglich eine einzige Dichtlage 64 mit der Sicke 76, so dass, da keine Trägerplatte vorgesehen ist, dieses Ausführungsbeispiel nicht unter den Wortlaut der Ansprüche fällt. Die Sicke 76 ist im Bereich des Sickenkamms 86 zur Bildung der Dichtoberfläche 72 mit der Metallbeschichtung 92 versehen ist, die in gleicher Weise ausgebildet ist wie beim ersten Ausführungsbeispiel.

Darüber hinaus ist die Dichtlage 64 beim zweiten Ausführungsbeispiel so ausgebildet, dass sie im Bereich ihrer Sickenfüße 82, 84 die Dichtoberflächenbereiche 52 bildet, die allerdings keine Metallbeschichtung 92 tragen, sondern mit ihrer Dichtlagenunterseite 68 auf der Abdichtfläche 54 der Kanalseite 26 aufliegt.

Im Übrigen ist das zweite Ausführungsbeispiel, insoweit als dieses dieselben Elemente aufweist wie das erste Ausführungsbeispiel, mit denselben Bezugszeichen versehen, so dass bezüglich dieser Elemente auf die Ausführungen zum ersten Ausführungsbeispiel Bezug genommen werden kann.

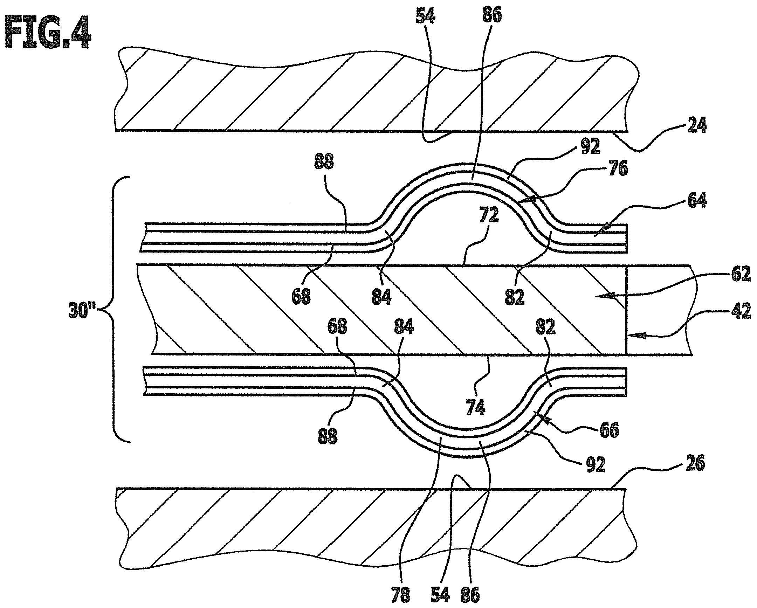

Bei einem dritten Ausführungsbeispiel einer erfindungsgemäßen Steuereinheit, dargestellt in Fig. 4, sind die Dichtlagen 64 und 66 nicht nur auf der Dichtlagenoberseite 88 mit der Metallbeschichtung 92 versehen, sondern ebenfalls auf der Dichtlagenunterseite 68, welche jeweils auf der entsprechenden Oberfläche 72, 74 der Trägerplatte 62 aufliegt, so dass dadurch auch noch die Abdichtung und Gleiteigenschaften im Bereich der Sickenfüße 82 und 84 der jeweiligen Sicke 76 und 78 verbessert werden können und somit auch die Abdichtung zwischen den Dichtlagen 64 und 66 sowie der Trägerplatte 62 verbessert wird.

Im Übrigen ist das dritte Ausführungsbeispiel in gleicher Weise ausgebildet wie das zweite Ausführungsbeispiel, so dass vollinhaltlich auf die Ausführungen zum zweiten Ausführungsbeispiel Bezug genommen werden kann.

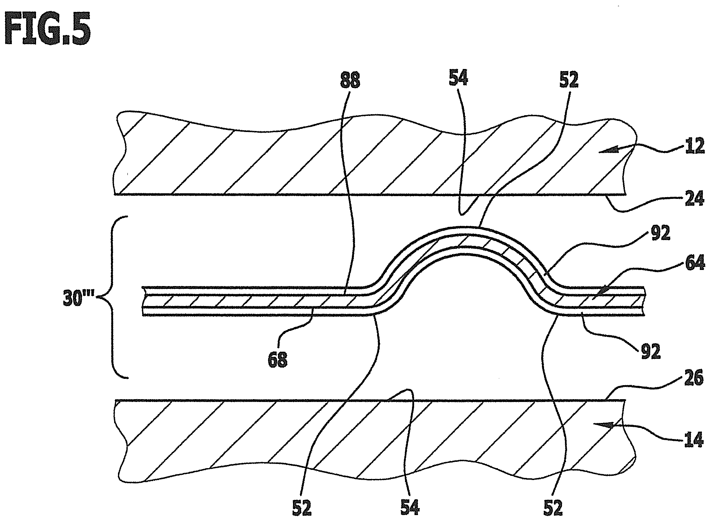

Bei einem vierten Ausführungsbeispiel, dargestellt in Fig. 5, welches eine Abwandlung des zweiten Ausführungsbeispiels darstellt und damit ebenfalls nicht unter den Wortlaut der Ansprüche fällt, ist die einzige Dichtlage 64 sowohl auf der Dichtlagenunterseite 68 als auch auf der Dichtlagenoberseite 88 mit der Metallbeschichtung 92 versehen, welche dadurch sowohl die Abdichtung zwischen der einzigen Dichtlage 64 und der Abdichtfläche 54 der Kanalseite 24 als auch der Abdichtfläche 54 der Kanalseite 26 verbessert und auf beiden Seiten der Dichtlage 64 ein relatives Gleiten der Abdichtflächen 54 relativ zu den Dichtoberflächen 52 der Zwischenlage 30"' zulässt.

Im Übrigen sind die weiteren Merkmale des vierten Ausführungsbeispiels mit denen des zweiten und ersten Ausführungsbeispiels identisch, so dass für dieselben Elemente dieselben Bezugszeichen Verwendung finden und diesbezüglich auf die Ausführungen zum zweiten und ersten Ausführungsbeispiel Bezug genommen werden.

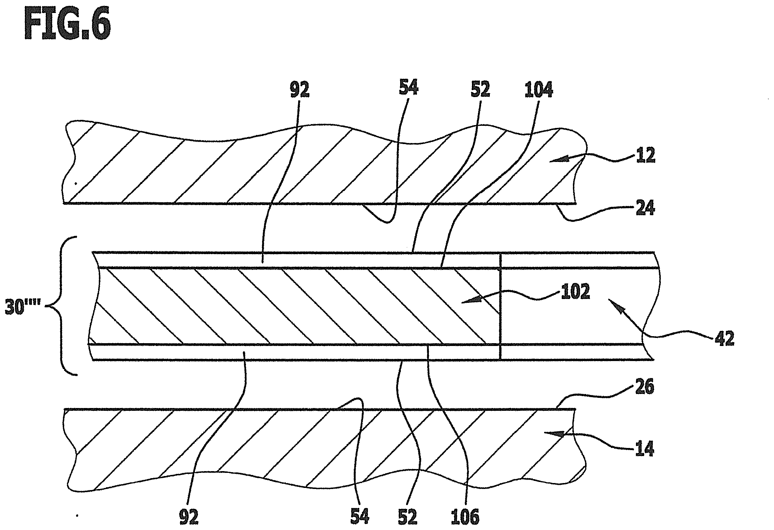

Bei einem fünften Ausführungsbeispiel, dargestellt in Fig. 6, ist als einzige Dichtlage 102 eine Flachmetalllage vorgesehen, welche Oberflächen 104 und 106 aufweist, die vorzugsweise parallel zu den Abdichtflächen 54 verlaufen. Soweit keine Trägerplatte vorgesehen ist, fällt dieses Ausführungsbeispiel nicht unter den Wortlaut der Ansprüche.

Eine derartige flache Dichtlage 102 ist ebenfalls auf ihren einander gegenüberliegenden Oberflächen 104 und 106 mit einer Metallbeschichtung 92 versehen, welche gemäß den voranstehenden Ausführungsbeispielen aufgebaut und ausgebildet ist und die Dichtflächenbereiche 52 bildet, welche zur Abdichtung an den Abdichtflächen 54 der Kanalseiten 24 und 26 anliegen.

Dabei kann sich die Metallbeschichtung 92 über die gesamten Oberflächen 104 und 106 der Dichtlage 102 erstrecken oder auch nur über die Teilbereiche der Dichtlage 102, in welchen eine Abdichtung mit den Abdichtflächen 54 erfolgen soll.

Im Übrigen sind all diejenigen Elemente des fünften Ausführungsbeispiels, die mit denen der voranstehenden Ausführungsbeispielen identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

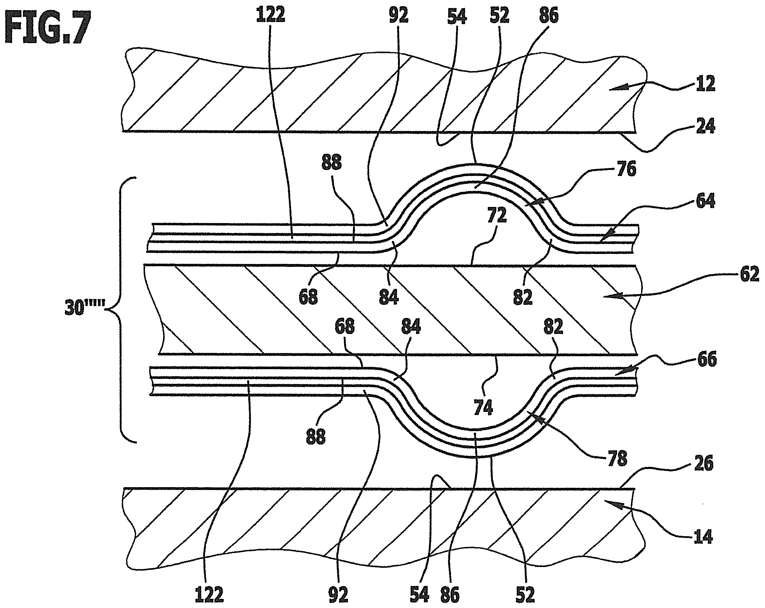

Bei einem in Fig. 7 dargestellten sechsten Ausführungsbeispiel einer erfindungsgemäßen Steuereinheit, welches eine Abwandlung des ersten Ausführungsbeispiels darstellt, ist die Metallbeschichtung 92 nicht unmittelbar auf die Dichtlagenoberseiten 88 der Dichtlagen 64 und 66 aufgetragen, sondern die Dichtlagenoberseiten 88 sind mit einer Hartbeschichtung 122 versehen, welche dann ihrerseits die Metallbeschichtungen 92 tragen.

Die Hartbeschichtungen 122 haben vorzugsweise eine Brinell-Härte von größer 100 HB und dienen zum Schutz des Materials der Dichtlagen 64 und 66, für den Fall, dass an den Dichtoberflächenbereichen 52 ein Abtrag der Metallbeschichtung 92 aufgrund langer Einsatzdauer derselben auftritt.

Ferner ist es möglich, die Hartbeschichtung 122 als Haftvermittlerschicht zwischen der jeweiligen Dichtlage 64, 66 und der Metallbeschichtung 92 einzusetzen, so dass dadurch auch die Haftung der Metallbeschichtung 92 an der Dichtlage 64, 66 verbessert werden kann.

Die Hartbeschichtung 122 hat vorzugsweise eine Dicke von 1 µm oder mehr.

Ferner hat die Hartbeschichtung 122 vorzugsweise eine Dicke von 10 µm oder weniger.

Als Materialien für die Hartbeschichtung 122 sind beispielsweise DLC, TiN, SiC, Cr oder Hartbronze vorgesehen.

Eine derartige Hartbeschichtung 122 zwischen der jeweiligen Dichtlage und der Metallbeschichtung 92 kann auch bei allen übrigen Ausführungsbeispielen, also insbesondere dem zweiten bis fünften Ausführungsbeispiel, zwischen der jeweiligen Dichtlage 62, 64 und der Metallbeschichtung 92 zum Einsatz kommen und hat dieselben Vorteile, wie sie im Zusammenhang mit dem sechsten Ausführungsbeispiel beschrieben wurden.

Im Übrigen sind auch beim sechsten Ausführungsbeispiel all diejenigen Elemente, die mit den voranstehenden Ausführungsbeispielen identisch sind, mit denselben Bezugszeichen versehen, so dass hinsichtlich der Beschreibung derselben vollinhaltlich auf die Ausführungen zu diesen Ausführungsbeispielen verwiesen werden kann.

## Patentansprüche

1. Steuereinheit (10) für fluidbetriebene Verbraucher, umfassend zwei Gehäuseteile (12, 14) mit einander zugewandten Abdichtflächen (54), zwischen denen eine Zwischenplatte (30) angeordnet ist, welche eine Trägerplatte (62) und beiderseits der Trägerplatte (62) angeordnete metallische Dichtlagen (64, 66) umfasst, wobei die Dichtlagen (64, 66) auf einander gegenüberliegenden Oberflächen (72, 74) der Trägerplatte (62) aufliegen und mit den jeweiligen Abdichtflächen (54) zugewandten Dichtoberflächenbereichen (52) an diesen Abdichtflächen (54) fluiddicht dichtend anliegen, **dadurch gekennzeichnet, dass** mindestens einer der Dichtoberflächenbereiche (52) durch eine freiliegende, relativ zu der jeweiligen Abdichtfläche (54) gleitfähige Metallbeschichtung (92) zur direkten Anlage an der jeweiligen Abdichtfläche (54) gebildet ist, wobei die Metallbeschichtung (92) eine Schichtdicke aufweist, die 10 µm oder kleiner ist.

2. Steuereinheit (10) nach Anspruch 1, **dadurch gekennzeichnet, dass** die Metallbeschichtung (92) aus einem Material gebildet ist, dessen Brinell-Härte kleiner als 50 HB ist.

3. Steuereinheit (10) nach einem der voranstehenden Ansprüche,
**dadurch gekennzeichnet, dass** die Metallbeschichtung (92) eine Schubfestigkeit aufweist, die größer als 2 MPa ist.

4. Steuereinheit (10) nach einem der voranstehenden Ansprüche,
**dadurch gekennzeichnet, dass** das Material der Metallbeschichtung (92) ein Metall oder eine Metalllegierung umfasst.

5. Steuereinheit (10) nach einem der voranstehenden Ansprüche,
**dadurch gekennzeichnet, dass** die Metallbeschichtung (92) eine Schichtdicke aufweist, die 1 µm oder größer, noch besser 2 µm oder größer ist und/oder dass die Metallbeschichtung (92) eine Schichtdicke aufweist, die 8 µm oder kleiner ist.

6. Steuereinheit (10) nach einem der voranstehenden Ansprüche,
**dadurch gekennzeichnet, dass** die Metallbeschichtung (92) auf einer Hartbeschichtung (122) aufgetragen ist, dass insbesondere die Hartbeschichtung (122) eine Brinell-Härte aufweist, die größer als 100 HB ist.

7. Steuereinheit (10) nach Anspruch 6, **dadurch gekennzeichnet, dass** die Hartbeschichtung (122) eine Schichtdicke aufweist, die 1 µm oder größer, noch besser 2 µm oder größer ist, und/oder dass die Hartbeschichtung (122) eine Schichtdicke aufweist, die 10 µm oder weniger beträgt.

8. Steuereinheit (10) nach Anspruch 6 oder 7, **dadurch gekennzeichnet, dass** die Schichtdicke der Hartbeschichtung (122) geringer ist als die Schichtdicke der Metallbeschichtung (92).

9. Steuereinheit (10) nach einem der Ansprüche 6 bis 8, **dadurch gekennzeichnet, dass** die Hartbeschichtung (122) direkt auf die Dichtlage (64, 66) aufgetragen ist.

10. Steuereinheit (10) nach einem der voranstehenden Ansprüche,
**dadurch gekennzeichnet, dass** die Dichtlage (64, 66) durch eine mit einer Sicke (76, 78) versehene Metallblechlage gebildet ist, insbesondere dass die freiliegende Metallbeschichtung (92) zumindest im Bereich eines einer der Abdichtflächen (54) zugewandten Sickenkamms (86) angeordnet ist.

11. Steuereinheit (10) nach einem der voranstehenden Ansprüche,
**dadurch gekennzeichnet, dass** die Dichtlage (64, 66) durch eine sich in einer zu den Abdichtflächen (54) parallelen Fläche erstreckende Blechlage gebildet ist.

12. Steuereinheit (10) nach Anspruch 11, **dadurch gekennzeichnet, dass** die Dichtlage (64, 66) parallel zu den Abdichtflächen verlaufende Dichtoberflächenbereiche (52) aufweist.

13. Steuereinheit (10) nach einem der voranstehenden Ansprüche, **dadurch gekennzeichnet, dass** die Abdichtflächen (54) eine mittlere Rautiefe aufweisen, die kleiner als 10 µm ist.

14. Steuereinheit (10) nach einem der voranstehenden Ansprüche, **dadurch gekennzeichnet, dass** die in den Dichtoberflächenbereichen (52) freiliegende Metallbeschichtung (92) mit den Abdichtflächen (54) eine Werkstoffpaarung bildet, deren Gleitreibungszahl 0,6 oder kleiner, noch besser 0,5 oder kleiner ist.

15. Steuereinheit (10) nach einem der voranstehenden Ansprüche, **dadurch gekennzeichnet, dass** die Abdichtflächen (54) der Gehäuseteile durch freiliegende Metalloberflächen gebildet sind.

## Claims

1. Control unit (10) for fluid-operated consuming devices, comprising two housing parts (12, 14) with sealing faces (54) facing toward one another, between which is arranged an intermediate plate (30) which comprises a carrier plate (62) and metallic seal layers (64, 66) arranged on both sides of the carrier plate (62), wherein the seal layers (64, 66) abut mutually opposite surfaces (72, 74) of the carrier plate (62) and, with seal surface regions (52) facing the respective sealing surfaces (54), abut these sealing surfaces (54) in a fluid-tight manner, **characterised in that** at least one of the seal surface regions (52) is formed by an exposed metal coating (92) which is capable of sliding relative to the respective sealing face (64) for direct contact with the respective sealing face (64), the metal coating (92) having a layer thickness that is 10 µm or less.

2. Control unit (10) according to claim 1, **characterised in that** the metal coating (92) is formed from a material the Brinell hardness of which is less than 50 HB.

3. Control unit (10) according to one of the preceding claims, **characterised in that** the metal coating (92) has a shear strength that is greater than 2 MPa.

4. Control unit according to one of the preceding claims, **characterised in that** the material of the metal coating (92) comprises a metal or a metal alloy.

5. Control unit (10) according to one of the preceding claims, **characterised in that** the metal coating (92) has a layer thickness that is 1 µm or greater, or better 2 µm or greater and/or **in that** the metal coating (92) has a layer thickness that is 8 µm or less.

6. Control unit (10) according to one of the preceding claims, **characterised in that** the metal coating (92) is applied onto a hard coating (122), **in that** in particular the hard coating (122) has a Brinell hardness that is greater than 100 HB.

7. Control unit (10) according to claim 6, **characterised in that** the hard coating (122) has a layer thickness that is 1 µm or greater, or better 2 µm or greater, and/or **in that** the hard coating (122) has a layer thickness that amounts to 10 µm or less.

8. Control unit (10) according to claim 6 or 7, **characterized in that** the layer thickness of the hard coating (122) is less than the layer thickness of the metal coating (92).

9. Control unit (10) according to one of claims 6 to 8, **characterised in that** the hard coating (122) is applied directly onto the seal layer (64, 66).

10. Control unit (10) according to one of the preceding claims, **characterised in that** the seal layer (64, 66) is formed by a sheet metal layer provided with a bead (76, 78), in particular **in that** the exposed metal coating (92) is arranged at least in the region of a bead crest (86) facing toward one of the sealing faces (54).

11. Control unit (10) according to one of the preceding claims, **characterised in that** the seal layer (64, 66) is formed by a sheet metal layer extending in a plane parallel to the sealing faces (54).

12. Control unit (10) according to claim 11, **characterised in that** the seal layer (64, 66) comprises seal surface regions (52) extending parallel to the sealing faces.

13. Control unit (10) according to one of the preceding claims, **characterised in that** the sealing faces (54) have a mean surface roughness that is less than 10µm.

14. Control unit (10) according to one of the preceding claims, **characterised in that** the exposed metal coating (92) in the seal surface regions (52) forms, with the sealing faces (54), a material pairing, the coefficient of sliding friction of which is 0.6 or less, or better 0.5 or less.

15. Control unit (10) according to one of the preceding claims, **characterised in that** the sealing faces (54) of the housing parts are formed by exposed metal surfaces.

## Revendications

1. Unité de commande (10) pour des récepteurs à commande fluidique, comprenant deux parties de boîtier (12, 14) avec des surfaces d'étanchéité (54) tournées l'une vers l'autre, entre lesquelles une plaque intermédiaire (30) est agencée, laquelle comporte une plaque porteuse (62) et des couches étanches (64, 66) métalliques agencées de part et d'autre de la plaque porteuse (62), dans laquelle les couches étanches (64, 66) sont placées sur des surfaces (72, 74) opposées l'une à l'autre de la plaque porteuse (62) et reposent hermétiquement de manière étanche au fluide contre ces surfaces d'étanchéité avec des zones de surfaces étanches (52) tournées vers les surfaces d'étanchéité (54) respectives, **caractérisée en ce qu'**au moins une des zones de surfaces étanches (52) est formée par un revêtement métallique (92) libre, glissant par rapport à la surface d'étanchéité (54) respective pour l'appui direct contre la surface d'étanchéité (54) respective, dans laquelle le revêtement métallique (92) présente une épaisseur de couche qui est de 10 µm ou moins.

2. Unité de commande (10) selon la revendication 1, **caractérisée en ce que** le revêtement métallique (92) est formé en un matériau, dont la dureté Brinell est inférieure à 50 HB.

3. Unité de commande (10) selon l'une quelconque des revendications précédentes, **caractérisée en ce que** le revêtement métallique (92) présente une résistance au cisaillement qui est supérieure à 2 MPa.

4. Unité de commande (10) selon l'une quelconque des revendications précédentes, **caractérisée en ce que** le matériau du revêtement métallique (92) comporte un métal ou un alliage de métal.

5. Unité de commande (10) selon l'une quelconque des revendications précédentes, **caractérisée en ce que** le revêtement métallique (92) présente une épaisseur de couche qui est de 1 µm ou plus, encore mieux de 2 µm ou plus et/ou que le revêtement métallique (92) présente une épaisseur de couche qui est de 8 µm ou moins.

6. Unité de commande (10) selon l'une quelconque des revendications précédentes, **caractérisée en ce que** le revêtement métallique (92) est appliqué sur un revêtement dur (122), qu'en particulier le revêtement dur (122) présente une dureté Brinell qui est supérieure à 100 HB.

7. Unité de commande (10) selon la revendication 6, **caractérisée en ce que** le revêtement dur (122) présente une épaisseur de couche qui est de 1 µm ou plus, encore mieux de 2 µm ou plus, et/ou que le revêtement dur (122) présente une épaisseur de couche qui s'élève à 10 µm ou moins.

8. Unité de commande (10) selon la revendication 6 ou 7, **caractérisée en ce que** l'épaisseur de couche du revêtement dur (122) est inférieure à l'épaisseur de couche du revêtement métallique (92).

9. Unité de commande (10) selon l'une quelconque des revendications 6 à 8, **caractérisée en ce que** le revêtement dur (122) est directement appliqué sur la couche étanche (64, 66).

10. Unité de commande (10) selon l'une quelconque des revendications précédentes, **caractérisée en ce que** la couche étanche (64, 66) est formée par une couche de tôle métallique pourvue d'une nervure (76, 78), en particulier que le revêtement métallique (92) libre est agencé au moins dans la zone d'une crête de nervure(86) tournée vers l'une des surfaces d'étanchéité (54).

11. Unité de commande (10) selon l'une quelconque des revendications précédentes, **caractérisée en ce que** la couche étanche (64, 66) est formée par une couche de tôle s'étendant dans une surface parallèle aux surfaces d'étanchéité (54).

12. Unité de commande (10) selon la revendication 11, **caractérisée en ce que** la couche étanche (64, 66) présente des zones de surfaces étanches (52) s'étendant parallèlement aux surfaces d'étanchéité.

13. Unité de commande (10) selon l'une quelconque des revendications précédentes, **caractérisée en ce que** les surfaces d'étanchéité (54) présentent une rugosité de surface moyenne qui est inférieure à 10 µm.

14. Unité de commande (10) selon l'une quelconque des revendications précédentes, **caractérisée en ce que** le revêtement métallique (92) libre dans les zones de surfaces étanches (52) forme avec les surfaces d'étanchéité (54) un appariement de matériaux, dont le coefficient de friction de glissement est de 0,6 ou moins, encore mieux de 0,5 ou moins.

15. Unité de commande (10) selon l'une quelconque des revendications précédentes, **caractérisée en ce que** les surfaces d'étanchéité (54) des parties de boîtier sont formées par des surfaces métalliques libres.
